# EUROPEAN PATENT APPLICATION

(11) **EP 0 698 637 A2**
(43) Date of publication of application: **28.02.1996**
(21) Application number: 95810506.6
(22) Date of filing: 14.08.1995
(51) Int. Cl.: C08K 5/3475

(54) **Polyurethanes stabilized with selected 5-substituted benzotriazole UV absorbers**

(30) Priority: 22.08.1994 US 293860
(71) Applicant: CIBA-GEIGY AG, CH-4002 Basel (CH)
(72) Inventor: Andrews, Stephen Mark, New Fairfield, CT 06812 (US); Ravichandran, Ramanathan, Nanuet, NY 10954 (US)

(57) **Abstract**

Selected 5-substituted benzotriazole UV absorbers which are red-shifted in their absorption characteristics are particularly effective in stabilizing aromatic polyurethanes or polyureas alone or in combination with hindered amine light stabilizers and/or phenolic or aromatic amine antioxidants.

## Description

Selected 5-substituted benzotriazole UV absorbers which are red-shifted in their absorption characteristics are particularly effective in stabilizing aromatic polyurethanes or polyureas alone or in combination with hindered amine light stabilizers and/or phenolic or aromatic amine antioxidants.

### Background of the Invention

U.S. Patent Nos. 4,433,067; 4,659,747; 4,686,242; 4,767,796 and 5,182,310 describe reaction injection molded (RIM) polyurethanes and polyureas which can be effectively stabilized by the stabilizers of this invention.

U.S. Patent Nos. 5,278,314 and 5,280,124 describe 5-substituted benzotriazole UV absorbers which are red-shifted in their absorbance characteristics. These benzotriazoles not only have increased absorbance, but it is also shifted toward longer wavelengths. These patents also describe the generic utility of such benzotriazoles alone in a host of polymeric substrates, without any specific emphasis on the polyurethanes, and also in the presence of other coadditives without any suggestion of the special symbiotic effects obtained when they are admixed with hindered amine light stabilizers.

It is well known that aromatic polyurethanes based on the reaction of a polyol with an aromatic isocyanate, such as 4,4'-methylenebis(phenyl isocyanate) (MDI), are more difficult to stabilize than aliphatic polyurethanes, upon exposure to light as taught by B. Randy et al., Photodegradation, Photo-oxidation and Photostabilization of Polymers, Principles and Applications, Wiley, 1975, p. 221. The aromatic polyurethanes tend both to discolor and lose useful mechanical and physical properties. This has limited the broad commercial utility of the aromatic polyurethanes. The discoloration of polyurethanes causes difficulty for fabricators who wish to color or pigment the polyurethane to a certain selected color.

Selected 5-substituted benzotriazoles demonstrate an unexpected efficacy towards stabilizing aromatic polyurethanes under dry xenon arc weatherometer exposures. These 5-substituted benzotriazoles, either alone or in combination with a hindered amine light stabilizer (HALS), are more effective as light stabilizers than conventional benzotriazoles that do not contain these red-shifting substituents on the 5-position of the benzo ring of the benzotriazole.

In particular, the red-shifted benzotriazoles demonstrate efficacy in reducing the rate of yellowing in an aromatic polyurethane when compared to a conventional benzotriazole. Other compounds that are red-shifted also demonstrate efficacy in reducing the rate of yellowing in aromatic polyurethanes. It is contemplated that the mechanical properties would also be improved for those polyurethanes that are stabilized with a red-shifted benzotriazole.

### Detailed Disclosure

The instant invention pertains to a composition stabilized against the deleterious effects of actinic radiation which comprises
(a) a polyurethane, polyurea or polyurethane-polyurea, and
(b) an effective stabilizing amount of a red-shifted benzotriazole of formula I, II or III

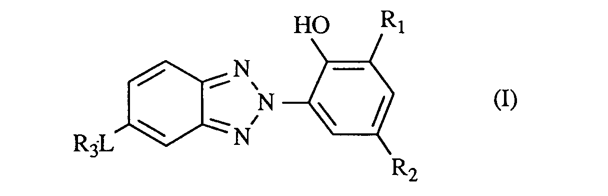

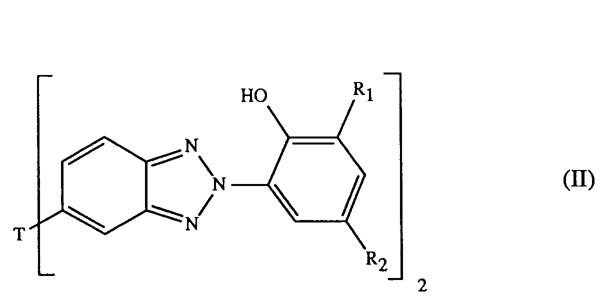

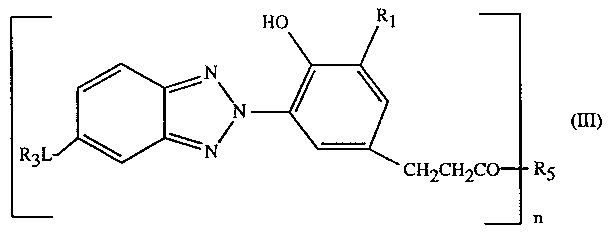

wherein
R₁ is hydrogen, straight or branched alkyl of 1 to 24 carbon atoms, cycloalkyl of 5 to 12 carbon atoms or phenylalkyl of 7 to 15 carbon atoms;
R₂ is straight or branched chain alkyl of 1 to 24 carbon atoms, cycloalkyl of 5 to 12 carbon atoms or phenylalkyl of 7 to 15 carbon atoms;
R₃ is alkyl of 8 to 18 carbon atoms, alkenyl of 3 to 18 carbon atoms, cycloalkyl of 5 to 12 carbon atoms, phenylalkyl of 7 to 15 carbon atoms, aryl of 6 to 10 carbon atoms or said aryl substituted by one or two alkyl of 1 to 4 carbon atoms;
L is -S-, -SO- or -SO₂-;
T is -S-, -SO-, -SO₂-, -S-E-S-, -SO-E-SO- or -SO₂-E-SO₂-;
where E is alkylene of 2 to 12 carbon atoms, cycloalkylene of 5 to 12 carbon atoms, or said alkylene interrupted or terminated by cyclohexylene of 8 to 12 carbon atoms;
n is 1 or 2;
when n is 1, R₅ is -OR₆ or -NH₂ where R₆ is hydrogen or alkyl of 1 to 24 carbon atoms; or said alkyl substituted by one or more -OH groups; or -OR₆ is -(OCH₂CH₂)_{w}OH or -(OCH₂CH₂)_{w}OR₇ where w is 1 to 12 and R₇ is alkyl of 1 to 12 carbon atoms, and
when n is 2, R₅ is -O-R₈-O- where R₈ is C₂-C₂₄alkylene interrupted by one to eleven -O- or R₈ is -CH₂-CHOH-CH₂-O-R₉-O-CH₂-CHOH-CH₂- where R₉ is phenylene, phenylene-G-phenylene where G is a direct bond, alkylene of 1 to 8 carbon atoms, -O-, -S- or -SO₂-.

Preferably, R₁ is hydrogen, branched alkyl of 3 to 12 carbon atoms, cyclohexyl or phenylalkyl of 7 to 9 carbon atoms,
R₂ is straight or branched chain alkyl of 1 to 12 carbon atoms, cyclohexyl or phenylalkyl of 7 to 9 carbon atoms,
R₃ is alkyl of 12 to 18 carbon atoms, allyl, cyclohexyl, phenylalkyl of 7 to 9 carbon atoms, phenyl or said phenyl substituted by one or two methyl groups,
L is -S-, -SO- or -SO₂-, and
T is -S-, -SO-, -SO₂-, -S-E-S-, -SO-E-SO- or -SO₂-E-SO₂-,
where E is alkylene of 2 to 6 carbon atoms, cycloalkylene of 6 to 8 carbon atoms or alkylene terminated by cyclohexylene of 8 to 10 carbon atoms.

Most preferably, R₁ is hydrogen, branched alkyl of 4 to 8 carbon atoms, cyclohexyl, benzyl, α-methylbenzyl or α,α-dimethylbenzyl,
R₂ is straight or branched chain alkyl of 1 to 8 carbon atoms, cyclohexyl, benzyl, α-methylbenzyl or α,α-dimethylbenzyl,
R₃ is phenyl,
L is -S- or -SO₂-, and
T is -S-, -SO- or -SO₂-.

A further preferred embodiment of the invention is a compound of formula III in which R₁ is tert-butyl, n is 1, R₃ is phenyl and R₅ is -OR₆ where R₆ is a straight chain or substituted octyl group. Yet another preferred embodiment of the instant invention is a compound of formula III where n is 2, R₁ is tert-butyl, R₃ is phenyl, and R₅ is -O-R₈-O-where R₈ is C₂-C₁₆alkylene interrupted by one to seven -O- or R₈ is -CH₂-CHOH-CH₂-O-R₉-O-CH₂-CHOH-CH₂- where R₉ is phenylene-G-phenylene where G is 2,2-isopropylidene.

As C₁-C₈-alkyl, R₁ is for example: methyl, ethyl, n-propyl, isopropyl, n-butyl, sec-butyl, tert-butyl, n-pentyl, tert-amyl, n-nexyl, n-heptyl, n-octyl, 2-ethylhexyl or tert-octyl. Tert-butyl is preferred.

When any of R₁ to R₉ is alkyl, such groups are, for example, methyl, ethyl, isopropyl, n-butyl, isobutyl, sec-butyl, tert-butyl, tert-amyl, 2-ethylhexyl, tert-octyl, lauryl, tert-dodecyl, tridecyl, n-hexadecyl, n-octadecyl and eicosyl; when any of said radicals is alkenyl, such groups are, for example, allyl or oleyl; when any of said radicals is cycloalkyl, such groups are, for example, cyclopentyl, cyclohexyl, cycloheptyl, cyclooctyl and cyclododecyl; when any of said radicals are phenylalkyl, such groups are, for example, benzyl, phenethyl, α-methylbenzyl and α,α-dimethylbenzyl; and when any of said radicals is aryl, they are, for example, phenyl, naphthyl, or when substituted by alkyl are, for example, tolyl and xylyl. When R₆ is alkyl substituted by one or more -O- groups and/or substituted by one or more -OH, the -OR₆ moiety can be -(OCH₂CH₂)_{w}OH or -(OCH₂CH₂)_{w}OR₇ where w is 1 to 12 and R₇ is alkyl of 1 to 12 carbon atoms, for example.

When E is alkylene, it is, for example, ethylene, tetramethylene, hexamethylene, 2-methyl-1,4-tetramethylene, hexamethylene, octamethylene, decamethylene and dodecamethylene; when E is cycloalkylene, it is, for example, cyclopentylene, cyclohexylene, cycloheptylene, cyclooctylene and cyclododecylene; and when E is alkylene interrupted or terminated by cyclohexylene, it is, for example, the saturated diyl radical derived from limonene, herein called dihydrolimonenediyl.

When the instant compounds contain a free carboxyl moiety where R₂ is -CH₂CH₂COOR₆ where R₆ is hydrogen, the alkali metal or amine salts of said acids are also contemplated as part of this invention allowing such UV absorbers to be used in aqueous systems due to the enhanced water solubility of such instant compounds.

The instant stabilized composition can additionally contain an effective stabilizing amount of a hindered amine derived from a 2,2,6,6-tetramethylpiperidine.

In general, the compounds of the present invention are employed in from about 0.01 to about 5% by weight of the stabilized composition. An advantageous range is from about 0.5 to about 3%, and especially 0.5 to about 1%.

It is contemplated that the polyurethanes stabilized by the instant stabilizers are those prepared from a balanced stoichiometry of diols and diisocyanates and those prepared where the diol or the diisocyanate is in excess. Additionally the diol may be an alkanediol, a polyol, a poly(ether polyol) or a poly(ester polyol). The diisocyanate may be aliphatic, alicyclic or aromatic in nature such as isophorone diisocyanate, 4,4'-methylenebis(phenyl isocyanate) or tolylene diisocyanate.

More particularly, the polymers stabilized in this invention are all types of aliphatic, cycloaliphatic and/or aromatic polyurethanes, polyureas or polyureapolyurethanes that are synthesized from one or more polyisocyanates with one or more polyols and/or polyamines. Preferred polymers contain aromatic structures, for example a benzene radical. The polyols include polyhydroxyl polymers or monomeric glycols or diols, and any crosslinking or chain extending compounds. Any catalysts that are known for the preparation of polyurethanes and/or polyureas are included. Other optional additives such as dispersing agents, surfactants, flame retardants, colorants, reinforcing agents can also be ingredients in the instant compositions.

Polyurethane applications include all of those thermoplastic or thermoset polyurethanes where stabilization of the polyurethane against the adverse effects of outdoor exposure and actinic light would be advantageous. These applications include, but are not limited to
a. RIM produced polyurethane products (microcellular RIM and solid RIM polyurethanes);
b. elastomers;
c. flexible and rigid foams;
d. molded compositions; and
e. skin foams such as RIM produced articles for exterior auto body parts.

Examples of isocyanate monomers include, but are not limited to
a. 2,4'- or 4,4'-diphenylmethane diisocyanate, known as "MDI";
b. tolylene 2,4- and 2,6-diisocyanate, known as "TDI";
c. MDI and TDI prepolymers;
d. 1,5-naphthalene diisocyanate, known as "NDI";
e. 1,6-hexamethylene diisocyanate, known as "HMDI";
f. 1,3- and 1,4-phenylene diisocyanates;
g. ethylene diisocyanate;
h. 1,12-dodecamethylene diisocyanate;
i. cyclobutane-1,3-diisocyanate;
j. cyclohexane-1,3- and 1,4-diisocyanates;
k. 1,5-diisocyanato-3,3,5-trimethylcyclohexane;
l. 2,4- and 2,6-hexahydrotoluene diisocyanates;
m. perhydro-2,4'- and 4,4'-diphenylmethane diisocyanates;
n. isophorone diisocyanate;
o. triphenylmethane-4,4',4''-triisocyanate; and
p. polyphenylpolymethylene polyisocyantes.

Examples of polyols include, but are not limited to
a. polyether polyols, preferably of structure HO-(RO)ₙH where n is a number from 2 to 1000, R is ethylene, propylene, butylene or the like;
b. polyester polyols, preferably of structure HO-R-O-(CO-R'-COO-R-O)ₙH where n is a number from 2 to 1000, R is as above and R' is a divalent aliphatic or aromatic moiety, such as those prepared by the esterification of dicarboxylic acids with di- or tri-functional alcohols, as seen in U.S. Patent No. 4,767,796;
c. polycarbonate polyols such as those seen in U.S. Patent Nos. 4,634,743 and 4,713,399;
d. poly(tetramethylene glycol ethers), PTMEG;
e. polyester ethers;
f. aliphatic diols or aliphatic triols; and
g. polyamines including amine terminated polyols useful for the production of RIM polyurea as seen in U.S. Patent No. 4,686,242.

Examples of chain extender compounds and crosslinking agents include, but are not limited to
a. aromatic and aliphatic amines as seen in U.S. Patent No. 4,659,747;
b. polyamines including amine terminated polyethylene-oxy-polypropylene-oxy-polyethers as seen in U.S. Patent No. 4,433,067;
c. glycols and aliphatic diols and triols as seen in U.S. Patent No. 4,767,796; and
d. aminoalcohols including triethanolamine.

The exact reasons for the symbiotic stabilization effects of a combination of a red-shifted benzotriazole and a hindered amine are unclear. It has been proposed that benzotriazoles absorb UV radiation and deactivate the excited singlet states in polyurethanes thus preventing photo-Fries reactions in the polymer which lead to discoloration and loss of mechanical properties. The hindered amines stabilizers are believed to interrupt oxidation cycles. Such a combination of stabilization effects, if accurate, clearly provide unexpectedly practical and superior stabilization for polyurethanes.

The presence of other coadditives such as phenolic antioxidants, amine antioxidants, hindered amine light stabilizers and the like are also contemplated. The resulting stabilized polymer compositions of the invention may optionally also contain from about 0.01 to about 5%, preferably from about 0.025 to about 2%, and especially from about 0.1 to about 1% by weight of various conventional additives, such as the materials listed below, or mixtures thereof.

When a red-shifted benzotriazole is used with a hindered amine light stabilizer, the preferred amount of the hindered amine is 0.1 to 0.5%, by weight, and of the red-shifted benzotriazole is 0.5 to 1% by weight.
1. Antioxidants
   1.1. Alkylated monophenols, for example,
      2,6-di-tert-butyl-4-methylphenol
      2-tert-butyl-4,6-dimethylphenol
      2,6-di-tert-butyl-4-ethylphenol
      2,6-di-tert-butyl-4-n-butylphenol
      2,6-di-tert-butyl-4-i-butylphenol
      2,6-di-cyclopentyl-4-methylphenol
      2-(α-methylcyclohexyl)-4,6-dimethylphenol
      2,6-di-octadecyl-4-methylphenol
      2,4,6-tri-cyclohexylphenol
      2,6-di-tert-butyl-4-methoxymethylphenol
      2,6-di-tert-butyl-4-nonylphenol
   1.2. Alkylated hydroquinones, for example,
      2,6-di-tert-butyl-4-methoxyphenol
      2,5-di-tert-butyl-hydroquinone
      2,5-di-tert-amyl-hydroquinone
      2,6-diphenyl-4-octadecyloxyphenol
   1.3. Hydroxylated thiodiphenyl ethers, for example,
      2,2'-thio-bis-(6-tert-butyl-4-methylphenol)
      2,2'-thio-bis-(4-octylphenol)
      4,4'-thio-bis-(6-tert-butyl-3-methylphenol)
      4,4'-thio-bis-(6-tert-butyl-2-methylphenol)
   1.4. Alkylidene-bisphenols, for example,
      2,2'-methylene-bis-(6-tert-butyl-4-methylphenol)
      2,2'-methylene-bis-(6-tert-butyl-4-ethylphenol)
      2,2'-methylene-bis-[4-methyl-6-(α-methylcyclohexyl)-phenol]
      2,2'-methylene-bis-(4-methyl-6-cyclohexylphenol)
      2,2'-methylene-bis-(6-nonyl-4-methylphenol)
      2,2'-methylene-bis-[6-(α-methylbenzyl)-4-nonylphenol]
      2,2'-methylene-bis-[6-(α,α-dimethylbenzyl)-4-nonylphenol]
      2,2'-methylene-bis-(4,6-di-tert-butylphenol)
      2,2'-ethylidene-bis-(4,6-di-tert-butylphenol)
      2,2'-ethylidene-bis-(6-tert-butyl-4-isobutylphenol)
      4,4'-methylene-bis-(2,6-di-tert-butylphenol)
      4,4'-methylene-bis-(6-tert-butyl-2-methylphenol)
      1,1-bis-(5-tert-butyl-4-hydroxy-2-methylphenyl)-butane
      2,6-di-(3-tert-butyl-5-methyl-2-hydroxybenzyl)-4-methylphenol
      1,1,3-tris-(5-tert-butyl-4-hydroxy-2-methylphenyl)-butane
      1,1-bis-(5-tert-butyl-4-hydroxy-2-methylphenyl)-3-n-dodecylmercaptobutane
      ethyleneglycol bis-[3,3-bis-(3'-tert-butyl-4'-hydroxyphenyl)-butyrate]
      di-(3-tert-butyl-4-hydroxy-5-methylphenyl)-dicyclopentadiene
      di-[2-(3'-tert-butyl-2'-hydroxy-5'-methyl-benzyl)-6-tert-butyl-4-methylphenyl] terephthalate.
   1.5. Benzyl compounds, for example,
      1,3,5-tri-(3,5-di-tert-butyl-4-hydroxybenzyl)-2,4,6-trimethylbenzene
      di-(3,5-di-tert-butyl-4-hydroxybenzyl) sulfide
      3,5-di-tert-butyl-4-hydroxybenzyl-mercapto-acetic acid isooctyl ester
      bis-(4-tert-butyl-3-hydroxy-2,6-dimethylbenzyl)dithiol terephthalate
      1,3,5-tris-(3,5-di-tert-butyl-4-hydroxybenzyl) isocyanurate
      1,3,5-tris-(4-tert-butyl-3-hydroxy-2,6-dimethylbenzyl) isocyanurate
      3,5-di-tert-butyl-4-hydroxybenzyl-phosphoric acid dioctadecyl ester
      3,5-di-tert-butyl-4-hydroxybenzyl-phosphoric acid monoethyl ester, calcium-salt
   1.6. Acylaminophenols, for example,
      4-hydroxy-lauric acid anilide
      4-hydroxy-stearic acid anilide
      2,4-bis-octylmercapto-6-(3,5-tert-butyl-4-hydroxyanilino)-s-triazine
      octyl-N-(3,5-di-tert-butyl-4-hydroxyphenyl)-carbamate
   1.7. Esters of β-(3,5-di-tert-butyl-4-hydroxyphenyl)-propionic acid
      with monohydric or polyhydric alcohols, for example,
      - methanol: diethylene glycol
      - octadecanol: triethylene glycol
      - 1,6-hexanediol: pentaerythritol
      - neopentyl glycol: tris-hydroxyethyl isocyanurate
      - thiodiethylene glycol: di-hydroxyethyl oxalic acid diamide
   1.8. Esters of β-(5-tert-butyl-4-hydroxy-3-methylphenyl)-propionic acid
      with monohydric or polyhydric alcohols, for example,
      - methanol: diethylene glycol
      - octadecanol: triethylene glycol
      - 1,6-hexanediol: pentaerythritol
      - neopentyl glycol: tris-hydroxyethyl isocyanurate
      - thiodiethylene glycol: di-hydroxyethyl oxalic acid diamide
   1.9. Amides of β-(3,5-di-tert-butyl-4-hydroxyphenyl)-propionic acid for example,
      N,N'-di-(3,5-di-tert-butyl-4-hydroxyphenylpropionyl)-hexamethylenediamine
      N,N'-di-(3,5-di-tert-butyl-4-hydroxyphenylpropionyl)-trimethylenediamine
      N,N'-di-(3,5-di-tert-butyl-4-hydroxyphenylpropionyl)-hydrazine
   1.10 Diarylamines, for example,
      diphenylamine, N-phenyl-1-naphthylamine, N-(4-tert-octylphenyl)-1-naphthylamine, 4,4'-di-tert-octyl-diphenylamine, reaction product of N-phenylbenzylamine and 2,4,4-trimethylpentene, reaction product of diphenylamine and 2,4,4-trimethylpentene, reaction product of N-phenyl-1-naphthylamine and 2,4,4-trimethylpentene.
2. UV absorbers and light stabilizers
   2.1. 2-(2'-Hydroxyphenyl)-benzotriazoles, for example, the 5'-methyl-, 3',5'-di-tert-butyl-, 5'-tert-butyl-, 5'-(1,1,3,3-tetramethylbutyl)-, 5-chloro-3',5'-di-tert-butyl-, 5-chloro-3'-tert-butyl-5'-methyl-, 3'-sec-butyl-5'-tert-butyl-, 4'-octoxy, 3',5'-di-tert-amyl-, 3',5'-bis-(α,α-dimethylbenzyl), 3'-tert-butyl-5'-(2-(omega-hydroxy-octa-(ethyleneoxy)carbonyl-ethyl)-, 3'-dodecyl-5'-methyl-, and 3'-tert-butyl-5'-(2-octyloxycarbonyl)ethyl-, and dodecylated-5'-methyl derivatives.
   2.2. 2-Hydroxy-benzophenones, for example, the 4-hydroxy-, 4-methoxy-, 4-octoxy, 4-decyloxy-, 4-dodecyloxy-, 4-benzyloxy, 4,2',4'-trihydroxy- and 2'-hydroxy-4,4'-dimethoxy derivatives.
   2.3. Esters of optionally substituted benzoic acids for example, phenyl salicylate, 4-tert-butylphenyl salicylate, octylphenyl salicylate, dibenzoylresorcinol, bis-(4-tert-butylbenzoyl)-resorcinol, benzoylresorcinol, 3,5-di-tert-butyl-4-hydroxybenzoic acid 2,4-di-tert-butylphenyl ester and 3,5-di-tert-butyl-4-hydroxybenzoic acid hexadecyl ester.
   2.4. Acrylates, for example, α-cyano-β,β-diphenylacrylic acid ethyl ester or isooctyl ester, α-carbomethoxy-cinnamic acid methyl ester, α-cyano-β-methyl-p-methoxy-cinnamic acid methyl ester or butyl ester, α-carbomethoxy-p-methoxy-cinnamic acid methyl ester, N-(β-carbomethoxy-β-cyanovinyl)-2-methyl-indoline.
   2.5. Nickel compounds, for example, nickel complexes of 2,2'-thio-bis-[4-(1,1,3,3-tetramethylbutyl)-phenol], such as the 1:1 or 1:2 complex, optionally with additional ligands such as n-butylamine, triethanolamine or N-cyclohexyl-diethanolamine, nickel dibutyldithiocarbamate, nickel salts of 4-hydroxy-3,5-di-tert-butylbenzylphosphonic acid monoalkyl esters, such as of the methyl, ethyl or butyl ester, nickel complexes of ketoximes such as of 2-hydroxy-4-methyl-phenyl undecyl ketoxime, nickel complexes of 1-phenyl-4-lauroyl-5-hydroxy-pyrazole, optionally with additional ligands.
   2.6. Sterically hindered amines, for example bis-(2,2,6,6-tetramethylpiperidyl) sebacate, bis-(1,2,2,6,6-pentamethylpiperidyl) sebacate, n-butyl-3,5-di-tert.butyl-4-hydroxybenzyl malonic acid bis-(1,2,2,6,6-pentanemethylpiperidyl)ester, condensation product of 1-hydroxyethyl-2,2,6,6-tetramethyl-4-hydroxypiperidine and succinic acid, condensation product of N,N'-(2,2,6,6-tetramethylpiperidyl)-hexamethylenediamine and 4-tert-octylamino-2,6-dichloro-s-triazine, tris-(2,2,6,6-tetramethylpiperidyl)-nitrilotriacetate, tetrakis-(2,2,6,6-tetramethyl-4-piperidyl) 1,2,3,4-butanetetracarboxylate, 1,1'(1,2-ethanediyl)-bis-(3,3,5,5-tetramethylpiperazinone), bis(1-octyloxy-2,2,6,6-tetramethylpiperidin-4-yl) sebacate.
   2.7. Oxalic acid diamides, for example, 4,4'-di-octyloxy-oxanilide, 2,2'-di-octyloxy-5,5'-di-tert-butyl-oxanilide, 2,2'-di-dodecyloxy-5,5'-di-tert-butyl-oxanilide, 2-ethoxy-2'-ethyl-oxanilide, N,N'-bis (3-dimethylaminopropyl)-oxalamide, 2-ethoxy-5-tert-butyl-2'-ethyloxanilide and its mixture with 2-ethoxy-2'-ethyl-5,4'-di-tert-butyloxanilide and mixtures of ortho- and para-methoxy- as well as of o- and p-ethoxy-disubstituted oxanilides.
   2.8. Hydroxyphenyl-s-triazines, for example 2,6-bis-(2,4-dimethylphenyl)-4-(2-hydroxy-4-octyloxyphenyl)-s-triazine; 2,6-bis-(2,4-dimethylphenyl)-4-(2,4-dihydroxyphenyl)-s-triazine; 2,4-bis(2,4-dihydroxyphenyl)-6-(4-chlorophenyl)-s-triazine; 2,4-bis[2-hydroxy-4-(2-hydroxyethoxy)phenyl]-6-(4-chlorophenyl)-s-triazine; 2,4-bis[2-hydroxy-4-(2-hydroxy-4-(2-hydroxyethoxy)phenyl] -6-(2,4-dimethylphenyl)-s-triazine; 2,4-bis[2-hydroxy-4-(2-hydroxyethoxy)phenyl]-6-(4-bromophenyl)-s-triazine; 2,4-bis[2-hydroxy-4-(2-acetoxyethoxy)phenyl]-6-(4-chlorophenyl)-s-triazine, 2,4-bis(2,4-dihydroxyphenyl)-6-(2,4-dimethylphenyl)-s-triazine.
3. Metal deactivators, for example, N,N'-diphenyloxalic acid diamide, N-salicylal-N'-salicyloylhydrazine, N,N'-bis-salicyloylhydrazine, N,N'-bis-(3,5-di-tert-butyl4-hydroxyphenylpropionyl)-hydrazine, 3-salicyloylamino-1,2,4-triazole, bis-benzylidene-oxalic acid dihydrazide.
4. Phosphites and phosphonites, for example, triphenyl phosphite, diphenylalkyl phosphites, phenyldialkyl phosphites, tri-(nonylphenyl) phosphite, trilauryl phosphite, trioctadecyl phosphite, di-stearyl-pentaerythritol diphosphite, tris-(2,4-di-tert-butylphenyl) phosphite, di-isodecylpentaerythritol diphosphite, di-(2,4-di-tert-butylphenyl)pentaerythritol diphosphite, tristearyl-sorbitol triphosphite, tetrakis-(2,4-di-tert-butylphenyl) 4,4'-diphenylylenediphosphonite.
5. Compounds which destroy peroxide, for example, esters of β-thiodipropionic acid, for example the lauryl, stearyl, myristyl or tridecyl esters, mercapto-benzimidazole or the zinc salt of 2-mercaptobenzimidazole, zinc dibutyl-dithiocarbamate, dioctadecyl disulfide, pentaerythritol tetrakis-(β-dodecylmercapto)-propionate.
6. Hydroxylamines, for example, N,N-dibenzylhydroxylamine,
   N,N-diethylhydroxylamine, N,N-dioctylhydroxylamine, N,N-dilaurylhydroxylamine, N,N-ditetradecylhydroxylamine, N,N-dihexadecylhydroxylamine, N,N-dioctadecylhydroxylamine, N-hexadecyl-N-octadecylhydroxylamine, N-heptadecyl-N-octadecylhydroxylamine, N,N-dialkylhydroxylamine derived from hydrogenated tallow amine.
7. Nitrones, for example, N-benzyl-alpha-phenyl nitrone, N-ethyl-alpha-methyl nitrone, N-octyl-alpha-heptyl nitrone, N-lauryl-alpha-undecyl nitrone, N-tetradecyl-alpha-tridecyl nitrone, N-hexadecyl-alpha-pentadecyl nitrone, N-octadecyl-alpha-heptadecylnitrone, N-hexadecyl-alpha-heptadecyl nitrone, N-octadecyl-alpha-pentadecyl nitrone, N-heptadecyl-alpha-heptadecyl nitrone, N-octadecyl-alpha-hexadecyl nitrone, nitrone derived from N,N-dialkylhydroxylamine derived from hydrogenated tallow amine.
8. Polyamide stabilizers, for example copper salts in combination with iodides and/or phosphorus compounds and salts of divalent manganese.
9. Basic co-stabilizers, for example, melamine, polyvinylpyrrolidone, dicyandiamide, triallyl cyanurate, urea derivatives, hydrazine derivatives, amines, polyamides, polyurethanes, alkali metal salts and alkaline earth metal salts of higher fatty acids for example Ca stearate, Zn stearate, Mg stearate, Na ricinoleate and K palmitate, antimony pyrocatecholate or zinc pyrocatecholate.
10. Nucleating agents, for example, 4-tert-butyl-benzoic acid, adipic acid, diphenylacetic acid.
11. Fillers and reinforcing agents, for example, calcium carbonate, silicates, glass fibers, asbestos, talc, kaolin, mica, barium sulfate, metal oxides and hydroxides, carbon black, graphite.
12. Other additives, for example, plasticizers, lubricants, emulsifiers, pigments, optical brighteners, flameproofing agents, anti-static agents, blowing agents and thiosynergists such as dilauryl thiodipropionate or distearyl thiodipropionate.
13. Benzofuranones and indolinones, for example those disclosed in US-A-4 325 863, US-A-4 338 244 or US-A-5 175 312, or 3-[4-(2-acetoxyethoxy)phenyl]-5,7-di-tert-butylbenzofuran-2-one, 5,7-di-tert-butyl-3-[4-(2-stearoyloxyethoxy)phenyl]benzofuran-2-one, 3,3'-bis[5,7-di-tert-butyl-3-(4-[2-hydroxyethoxy]phenyl)benzofuran-2-one], 5,7-di-tert-butyl-3-(4-ethoxyphenyl)benzofuran-2-one, 3-(4-acetoxy-3,5-dimethylphenyl)-5,7-di-tert-butyl-benzofuran-2-one, 3-(3,5-dimethyl-4-pivaloyloxyphenyl)-5,7-di-tert-butyl-benzofuran-2-one.

The phenolic antioxidant of particular interest is selected from the group consisting of n-octadecyl 3,5-di-tert-butyl-4-hydroxyhydrocinnamate, neopentanetetrayl tetrakis-(3,5-di-tert-butyl-4-hydroxyhydrocinammate), octyl 3,5-di-tert-butyl-4-hydroxyhydrocinnamate, di-n-octadecyl 3,5-di-tert-butyl-4-hydroxybenzylphosphonate, 1,3,5-tris-(3,5-di-tert-butyl-4-hydroxybenzyl)isocyanurate, thiodiethylene bis(3,5-di-tert-butyl-4-hydroxyhydrocinnamate), 1,3,5-trimethyl-2,4,6-tris(3,5-di-tert-butyl-4-hydroxybenzyl)benzene, 3,6-dioxaoctamethylene bis(3-methyl-5-tert-butyl-4-hydroxyhydro-cinnamate), 2,6-di-tert-butyl-p-cresol, 2,2'-ethylidene-bis(4,6-di-tert-butylphenol), 1,3,5-tris(2,6-dimethyl-4-tert-butyl-3-hydroxybenzyl)isocynurate, 1,1,3,-tris(2-methyl-4-hydroxy-5-tert-butylphenyl)butane, 1,3,5-tris[2-(3,5-di-tert-butyl-4-hydroxyhydrocinnamoyloxy)ethyl]isocyanurate, 3,5-di-(3,5-di-tert-butyl-4-hydroxy-benzyl)mesitol, hexamethylene bis(3,5-di-tert-butyl-4-hydroxyhydrocinnamate), 1-(3,5-di-tert-butyl-4-hydroxyanilino)-3,5-di(octylthio)-s-triazine, N,N'-hexamethylene-bis(3,5-di-tert-butyl-4-hydroxyhydrocinnamamide), calcium bis(ethyl 3,5-di-tert-butyl-4-hydroxybenzylphosphonate), ethylene bis[3,3-di(3-tert-butyl-4-hydroxyphenyl)butyrate], octyl 3,5-di-tert-butyl-4-hydroxybenzylmercaptoacetate, bis(3,5-di-tert-butyl-4-hydroxyhydrocinnamoyl)hydrazide, and N,N'-bis[2-(3,5-di-tert-butyl-4-hydroxyhydrocinnamoyloxy)-ethyl]-oxamide.

A most preferred phenolic antioxidant is neopentanetetrayl tetrakis(3,5-di-tert-butyl-4-hydroxyhydrocinnamate), n-octadecyl 3,5-di-tert-butyl-4-hydroxyhydrocinnamate, octyl 3,5-di-tert-butyl-4-hydroxyhydrocinnamate, 1,3,5-trimethyl-2,4,6-tris(3,5-di-tert-butyl-4-hydroxybenzyl)benzene, 1,3,5-tris(3,5-di-tert-butyl-4-hydroxybenzyl)isocyanurate, 2,6-di-tert-butyl-p-cresol or 2,2'-ethylidene-bis(4,6-di-tert-butylphenol).

The hindered amine compound of particular interest is selected from the group consisting of bis(2,2,6,6-tetramethylpiperidin-4-yl) sebacate, bis(1,2,2,6,6-pentamethylpiperidin-4-yl) sebacate, di(1,2,2,6,6-pentamethylpiperidin-4-yl) (3,5-di-tert-butyl-4-hydroxybenzyl)butylmalonate, 4-benzoyl-2,2,6,6-tetramethylpiperidine, 4-stearyloxy-2,2,6,6-tetramethylpiperidine, 3-n-octyl-7,7,9,9-tetramethyl-1,3,8-triaza-spiro[4.5]decane-2,4-dione, tris(2,2,6,6-tetramethylpiperidin-4-yl) nitrilotriacetate, 1,2-bis(2,2,6,6-tetramethyl-3-oxopiperazin-4-yl)ethane, 2,2,4,4-tetramethyl-7-oxa-3,20-diaza-21-oxodispiro[5.1.11.2] heneicosane, polycondensation product of 2,4-dichloro-6-tert-octylamino-s-triazine and 4,4'-hexamethylenebis(amino-2,2,6,6-tetramethylpiperidine), polycondensation product of 1-(2-hydroxyethyl)-2,2,6,6-tetramethyl-4-hydroxypiperidine and succinic acid, polycondensation product of 4,4'-hexamethylene-bis-(amino-2,2,6,6-tetramethylpiperidine) and 1,2-dibromoethane, tetrakis(2,2,6,6-tetramethylpiperidin-4-yl) 1,2,3,4-butanetetracarboxylate, tetrakis(1,2,2,6,6-pentamethylpiperidin-4-yl)1,2,3,4-butanetetracarboxylate, polycondensation product of 2,4-dichloro-6-morpholino-s-triazine and 4,4'-hexamethylenebis(amino-2,2,6,6-tetramethylpiperidine), N,N',N'',N'''-tetrakis[(4,6-bis(butyl-2,2,6,6-tetramethyl-piperidin-4-yl)-amino-s-triazin-2-yl]-1,10-diamino-4,7-diaza decane, mixed [2,2,6,6-tetramethylpiperidin-4-yl/β,β,β',β'-tetramethyl-3,9-(2,4,8,10-tetraoxaspiro[5.5]-undecane) diethyl] 1,2,3,4-butanetetracarboxylate, mixed [1,2,2,6,6-pentamethylpiperidin-4-yl/β,β,β',β'-tetramethyl-3,9-(2,4,8,10-tetraoxaspiro[5.5] undecane)diethyl] 1,2,3,4-butanetetracarboxylate, octamethylene bis(2,2,6,6-tetramethylpiperidin-4-carboxylate), 4,4'-ethylenebis(2,2,6,6-tetramethylpiperazin-3-one), and bis(1-octyloxy-2,2,6,6-tetramethylpiperidin-4-yl) sebacate.

A most preferred hindered amine compound is bis(2,2,6,6-tetramethylpiperidin-4-yl) sebacate, the polycondensation product of 1-(2-hydroxyethyl)-2,2,6,6-tetramethyl-4-hydroxypiperdine and succinic acid, the polycondensation product of 2,4-dichloro-6-tert-octylamino-s-triazine and 4,4'-hexamethylenebis(amino-2,2,6,6-tetramethylpiperidine), N,N',N'',N'''-tetrakis[(4,6-bis(butyl-(2,2,6,6-tetramethyl-piperidin-4-yl)amino)-s-triazine-2-yl]-1,10-diamino-4,7-diazadecane or bis(1-octyloxy-2,2,6,6-tetramethylpiperidin-4-yl) sebacate.

In respect to utility of the instant stabilizers, it is clear that the instant red-shifted benzotriazoles significantly reduce the extent of yellowing in an aromatic polyurethane compared to some other classes of UV absorbers including conventional o-hydroxyphenyl-2H-benzotriazoles, o-hydroxybenzophenones, and other types of o-hydroxyphenyl-s-triazines. Such instant compositions might allow an aromatic polyurethane article to be used in applications where prolonged light exposure is required, such as external automobile fascia, bumpers, etc.

Additionally, the combination of a red-shifted benzotriazole with a hindered amine light stabilizer provides a further reduction in yellowing in aromatic polyurethanes compared to the red-shifted benzotriazole alone. This is a beneficial phenomena in that the cost of a total stabilizer package may be reduced by replacing some portion of a more expensive benzotriazole with a less expensive hindered amine light stabilizer as a coadditive.

It is also contemplated a portion of the red-shifted benzotriazole of instant formula I, II or III can be replaced with a conventional UV absorber and still provide stabilized compositions with excellent resistance to degradation induced by actinic radiation. Representative of, but not limited to, such conventional UV absorbers, such as the conventional benzotriazoles, are the following compounds:
a. 2-hydroxy-4-octyloxybenzophenone;
b. 2-(2-hydroxy-4-octyloxyphenyl)-4,6-bis(2,4-dimethylphenyl)-s-triazine;
c. 2-(2-hydroxy-4-hexyloxyphenyl)-4,6-diphenyl-s-triazine;
d. 2-(2-hydroxy-5-methylphenyl)-2H-benzotriazole;
e. 2-[2-hydroxy-3,5-(α,α-dimethylbenzyl)phenyl]-2H-benzotriazole;
f. 2-(2-hydroxy-3,5-di-tert-amylphenyl)-2H-benzotriazole;
g. 2-(2-hydroxy-5-tert-octylphenyl)-2H-benzotriazole;
h. 2-(2-hydroxy-3-α-cumyl-5-tert-octylphenyl)-2H-benzotriazole;
i. 5-chloro-2-(2-hydroxy-3,5-di-tert-butylphenyl)-2H-benzotriazole; or
j. 5-chloro-2-[2-hydroxy-3-tert-butyl-5-(2-octyloxycarbonylethyl)phenyl]-2H-benzotriazole.

The following examples are meant for illustrative purposes only and are not to be construed to limit the scope of the instant invention in any manner whatsoever.

### Example 1

A typical synthesis of an aromatic polyurethane, and its conversion into a solid disk is described below using the following reagents:

| Reagent | Equivalent Weight | parts or grams | Source |
|---|---|---|---|
| polyether polyol Voranol® 4701 | 1665 | 87 | Dow Chemicals |
| 1,4-butanediol | 45.1 | 13 | Aldrich |
| dibutyl tin dilaurate (DABCO® T-12) catalyst | -- | 0.10 | Air Products |
| poly(dimethyl siloxane), SAG®-47 | -- | 0.10 | Organosilicon Inc. |
| 4,4'-methylenebis(phenyl isocyanate) Isonate® 143L | 144.0 | 49 | Dow Chemicals |

The general synthesis procedure follows:
1. To a glass vessel is weighed the poly(ether polyol), 1,4-butanediol, DABCO® T-12 catalyst, and SAG®-47 antifoam agent. The UV absorber is also added at this point. The mixture is stirred, optionally with heat, until all components are dissolved and a visually homogeneous solution is obtained.
2. The vessel containing the reagents is placed in a vacuum desiccator and stored under vacuum typically for 30 minutes, until any trapped air or moisture is removed.
3. The vessel is removed and placed under a mechanical stirrer equipped with a paddle stirrer. Preferably, the best results are obtained when the vessel is surrounded by a dry ice bath, to mediate the exothermic reaction that occurs upon the addition of the diisocyanate.
4. The contents of the vessel are then stirred as a weighed amount of the diisocyanate is added rapidly. The polymerizing solution is then stirred, typically less than 30 seconds, depending on the amount of catalyst used. This polymer solution becomes exothermic and viscous.
5. The polymerization mixture is poured quickly into a polystyrene petri dish. The polyurethane solidifies from within seconds to within several minutes. The petri dish is placed in an oven heated at about 60°C. Vacuum is applied for typically 3 to 5 minutes, then released. The polymer disk formed is subjected to heat for several hours and then stored overnight at ambient temperature, and shielded from light.
6. The polymer disk is removed from the dish and stored away from light until exposure in a xenon arc weatherometer (XAW) is performed.

The polyurethane disks are then exposed in an Atlas Ci65A Xenon Weather-ometer with these conditions:
dry xenon, continuous light, black panel temperature 63°C, irradiance 0.35 watt/m.

Two polyurethane disks of each formulation containing a specific stabilizer component are exposed to the dry Xenon Weather-ometer conditions. Yellowness index (YI) values are measured on an ACS Chroma Sensor CS-5 Spectrophotometer using the ASTM D1925 method.

The following YI data are an average of one YI reading from each of the two polyurethane disks of each formulation. The change in YI (Δ YI) is defined as the YI value at 144 hours of exposure minus the YI value of the unexposed disk.

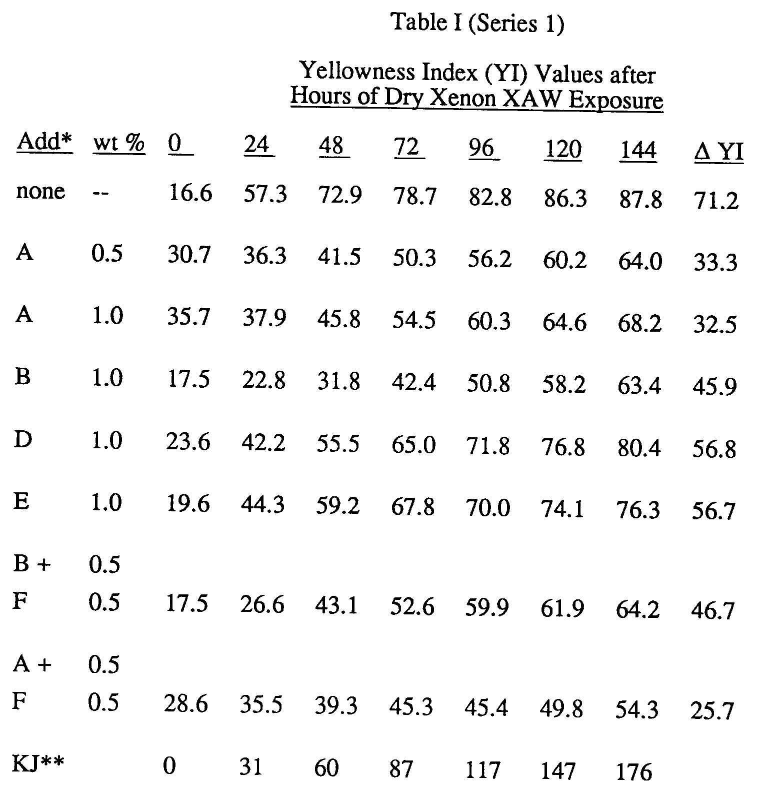

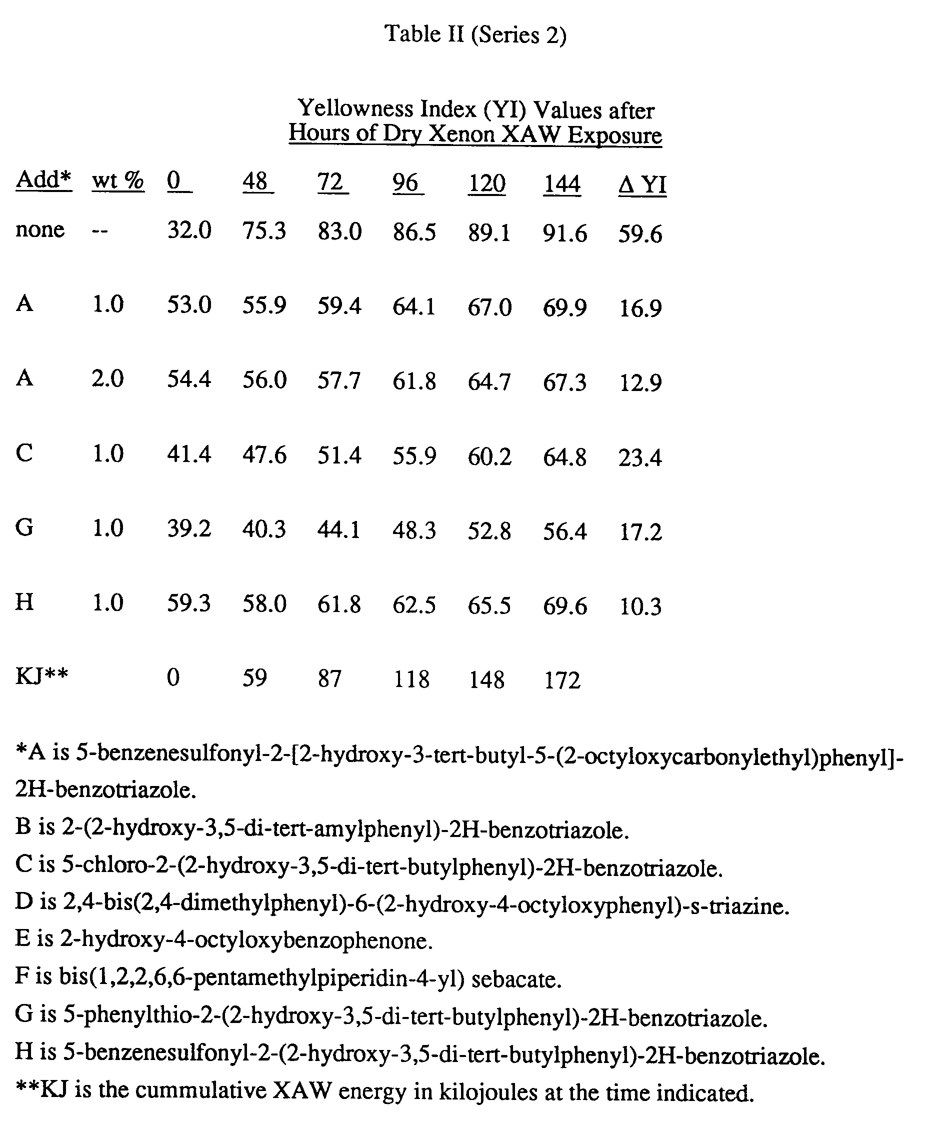

Low Δ YI values are desired. The red-shifted benzotriazole UV absorbers each exhibit low Δ YI values while the other benzotriazoles, s-triazine and benzophenone UV absorbers do not protect the polyurethane from discoloration as witnessed by their high Δ YI numbers. Inspection of these data also show that replacement of some of the red-shifted benzotriazole (but not a conventional benzotriazole) with a hindered amine also maintains excellent protection against discoloration.

Some of these benzotriazole stabilizers are available commercially while others are described in U.S. Patent Nos. 5,278,314 and 5,280,124.

## Claims

1. A composition stabilized against the deleterious effects of actinic radiation which comprises
(a) a polyurethane, polyurea or polyurethane-polyurea, and
(b) an effective stabilizing amount of a red-shifted benzotriazole of formula I, II or III 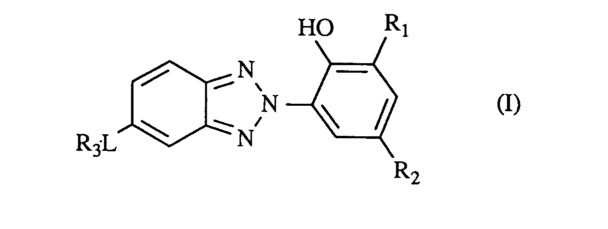 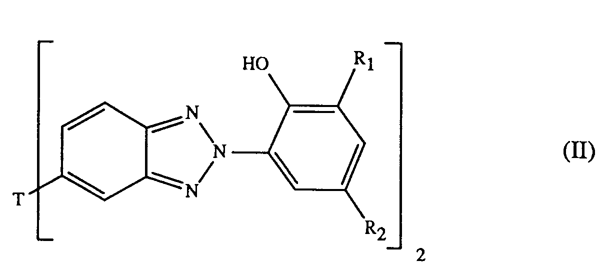 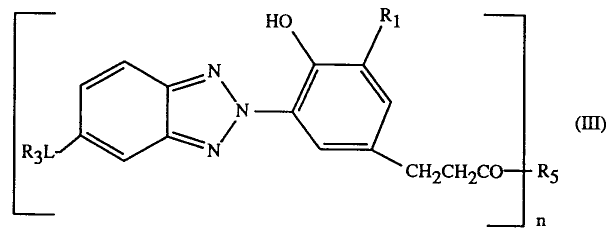
wherein
R₁ is hydrogen, straight or branched alkyl of 1 to 24 carbon atoms, cycloalkyl of 5 to 12 carbon atoms or phenylalkyl of 7 to 15 carbon atoms;
R₂ is straight or branched chain alkyl of 1 to 24 carbon atoms, cycloalkyl of 5 to 12 carbon atoms or phenylalkyl of 7 to 15 carbon atoms;
R₃ is alkyl of 8 to 18 carbon atoms, alkenyl of 3 to 18 carbon atoms, cycloalkyl of 5 to 12 carbon atoms, phenylalkyl of 7 to 15 carbon atoms, aryl of 6 to 10 carbon atoms or said aryl substituted by one or two alkyl of 1 to 4 carbon atoms;
L is -S-, -SO- or -SO₂-;
T is -S-, -SO-, -SO₂-, -S-E-S-, -SO-E-SO- or -SO₂-E-SO₂-;
where E is alkylene of 2 to 12 carbon atoms, cycloalkylene of 5 to 12 carbon atoms, or said alkylene interrupted or terminated by cyclohexylene of 8 to 12 carbon atoms;
n is 1 or 2;
when n is 1, R₅ is -OR₆ or -NH₂ where R₆ is hydrogen or alkyl of 1 to 24 carbon atoms; or said alkyl substituted by one or more -OH groups; or -OR₆ is -(OCH₂CH₂)_{w}OH or -(OCH₂CH₂)_{w}OR₇ where w is 1 to 12 and R₇ is alkyl of 1 to 12 carbon atoms, and
when n is 2, R₅ is -O-R₈-O- where R₈ is C₂-C₂₄alkylene interrupted by one to eleven -O- or R₈ is -CH₂-CHOH-CH₂-O-R₉-O-CH₂-CHOH-CH₂- where R₉ is phenylene, phenylene-G-phenylene where G is a direct bond, alkylene of 1 to 8 carbon atoms, -O-, -S-or -SO₂-.

2. A composition according to claim 1 where in the compound of component (b)
R₁ is hydrogen, branched alkyl of 3 to 12 carbon atoms, cyclohexyl or phenylalkyl of 7 to 9 carbon atoms,
R₂ is straight or branched chain alkyl of 1 to 12 carbon atoms, cyclohexyl or phenylalkyl of 7 to 9 carbon atoms,
R₃ is alkyl of 12 to 18 carbon atoms, allyl, cyclohexyl, phenylalkyl of 7 to 9 carbon atoms, phenyl or said phenyl substituted by one or two methyl groups,
L is -S-, -SO- or -SO₂-, and
T is -S-, -SO-, -SO₂-, -S-E-S-, -SO-E-SO- or -SO₂-E-SO₂-,
where E is alkylene of 2 to 6 carbon atoms, cycloalkylene of 6 to 8 carbon atoms or alkylene terminated by cyclohexylene of 8 to 10 carbon atoms.

3. A composition according to claim 2 where in the compound of component (b)
R₁ is hydrogen, branched alkyl of 4 to 8 carbon atoms, cyclohexyl, benzyl, α-methylbenzyl or α,α-dimethylbenzyl,
R₂ is straight or branched chain alkyl of 1 to 8 carbon atoms, cyclohexyl, benzyl, α-methylbenzyl or α,α-dimethylbenzyl,
R₃ is phenyl,
L is -S- or -SO₂-, and
T is -S-, -SO- or -SO₂-.

4. A composition according to claim 1 where in the compound of formula III of component (b)
R₁ is tert-butyl,
R₃ is phenyl,
n is 1 or 2,
when n is 1,
R₅ is -OR₆ where R₆ is a straight chain or substituted octyl group; or
when n is 2, R₅ is -O-R₈-O- where R₈ is C₂-C₁₆alkylene interrupted by one to seven -O- or R₈ is -CH₂-CHOH-CH₂-O-R₉-O-CH₂-CHOH-CH₂- where R₉ is phenylene-G-phenylene where G is 2,2-isopropylidene.

5. A composition according to claim 1 wherein component (b) is
5-benzenesulfonyl-2-[2-hydroxy-3-tert-butyl-5-(2-octyloxycarbonylethyl)phenyl]-2H-benzotriazole;
5-phenylthio-2-(2-hydroxy-3,5-di-tert-butylphenyl)-2H-benzotriazole; or
5-benzenesulfonyl-2-(2-hydroxy-3,5-di-tert-butylphenyl)-2H-benzotriazole.

6. A composition according to claim 1 which additionally contains an effective stabilizing amount of a hindered amine.

7. A composition according to claim 6 wherein the hindered amine is bis(1,2,2,6,6-pentamethylpiperidin-4-yl) sebacate.

8. A composition according to claim 1 which additionally contains an effective stabilizing amount of a phenolic antioxidant.

9. A composition according to claim 1 which additionally contains an effective stabilizing amount of an aromatic amine antioxidant.

10. A composition according to claim 1 which additionally contains an effective stabilizing amount of a combination of hindered amine and a phenolic antioxidant; of a combination of hindered amine and an aromatic amine antioxidant; or of a combination of a hindered amine, a phenolic antioxidant and an aromatic amine antioxidant.

11. A composition according to claim 1 which additionally contains an effective stabilizing amount of a second UV absorber which is an o-hydroxyphenyl-2H-benzotriazole, an o-hydroxybenzophenone, or an o-hydroxy-phenyl-s-triazine.

12. A composition according to claim 11 wherein the second UV absorber is a o-hydroxyphenyl--benzotriazole.

13. A composition according to claim 11 wherein the second UV absorber is
a. 2-hydroxy-4-octyloxybenzophenone;
b. 2-(2-hydroxy-4-octyloxyphenyl)-4,6-bis(2,4-dimethylphenyl)-s-triazine;
c. 2-(2-hydroxy-4-hexyloxyphenyl)-4,6-diphenyl-s-triazine;
d. 2-(2-hydroxy-5-methylphenyl)-2H-benzotriazole;
e. 2-[2-hydroxy-3,5-(α-α-dimethylbenzyl)phenyl]-2H-benzotriazole;
f. 2-(2-hydroxy-3,5-di-tert-amylphenyl)-2H-benzotriazole;
g. 2-(2-hydroxy-5-tert-octylphenyl)-2H-benzotriazole;
h. 2-(2-hydroxy-3-α-cumyl-5-tert-octylphenyl)-2H-benzotriazole;
i. 5-chloro-2-(2-hydroxy-3,5-di-tert-butylphenyl)-2H-benzotriazole; or
j. 5-chloro-2-[2-hydroxy-3-tert-butyl-5-(2-octyloxycarbonylethyl)phenyl]-2H-benzotriazole.

14. A composition according to claim 1 wherein the effective amount of red-shifted benzotriazole of formula I, II or III is 0.01 to 5% by weight, based on the weight of the polymer forming components.

15. A composition according to claim 14 which additionally contains a hindered amine where the effective stabilizing amount of the hindered amine is 0.01 to 5% by weight, based on the weight of the polymer forming components.

16. A composition according to claim 15 wherein the effective stabilizing amount of the hindered amine is from 0.1 to 1% by weight.

17. A composition according to claim 1 wherein the polyurethane is prepared from equimolar or non-stoichiometric amounts of an aliphatic, alicyclic and/or aromatic polyisocyanate and a polyol.

18. A composition according to claim 17 wherein the polyisocyanate is selected from the group consisting of
a. 2,4'- or 4,4'-diphenylmethane diisocyanate, known as "MDI";
b. tolylene 2,4- and 2,6-diisocyanate, known as "TDI";
c. MDI and TDI prepolymers;
d. 1,5-naphthalene diisocyanate, known as "NDI";
e. 1,6-hexamethylene diisocyanate, known as "HMDI";
f. 1,3- and 1,4-phenylene diisocyanates;
g. ethylene diisocyanate;
h. 1,12-dodecamethylene diisocyanate;
i. cyclobutane-1,3-diisocyanate;
j. cyclohexane-1,3- and 1,4-diisocyanates;
k. 1,5-diisocyanato-3,3,5-trimethylcyclohexane;
l. 2,4- and 2,6-hexahydrotoluene diisocyanates;
m. perhydro-2,4'- and 4,4'-diphenylmethane diisocyanates;
n. isophorone diisocyanate; and
o. triphenylmethane-4,4',4''-triisocyanate; and
the polyols are selected from the group consisting of
a. polyether polyols;
b. polyester polyols;
c. polycarbonate polyols;
d. poly(tetramethylene glycol ethers), PTMEG;
e. polyester ethers;
f. aliphatic diols or aliphatic triols; and
g. polyamines including amine terminated polyols.
